# EUROPÄISCHE PATENTSCHRIFT

(11) **EP 3 247 550 B1**
(45) Veröffentlichungstag und Bekanntmachung des Hinweises auf die Patenterteilung: **17.02.2021**
(21) Anmeldenummer: 15794822.5
(22) Anmeldetag: 29.10.2015
(51) Int. Cl.: B29C 63/04, B29C 63/00, F25D 23/06

(54) **VERFAHREN ZUM ANBRINGEN EINER FOLIE AUF EINEN KÖRPER**
METHOD FOR APPLYING A FILM ONTO A BODY
PROCÉDÉ D'APPLICATION D'UN FILM SUR UN CORPS

(30) Priorität: 22.01.2015 DE 102015000822; 24.06.2015 DE 102015008161
(43) Veröffentlichungstag der Anmeldung: 29.11.2017
(73) Patentinhaber: Liebherr-Hausgeräte Lienz GmbH, 9900 Lienz (AT); Liebherr-Hausgeräte Ochsenhausen GmbH, 88416 Ochsenhausen (DE)
(72) Erfinder: HIEMEYER, Jochen, 97753 Karlstadt (DE); FREITAG, Michael, 97082 Würzburg (DE); KERSTNER, Martin, 97072 Würzburg (DE)
(74) Vertreter: Herrmann, Uwe
(86) Internationale Anmeldenummer: PCT/EP2015/002166
(87) Internationale Veröffentlichungsnummer: WO 2016/116118

(56) Entgegenhaltungen:
- EP-A1- 0 442 691
- EP-A1- 1 510 747
- EP-A2- 1 719 604
- EP-A2- 2 765 375
- WO-A2-02/26475

## Beschreibung

Die vorliegende Erfindung betrifft ein Verfahren zum Anbringen einer Folie auf einen Körper.

Vakuumdämmkörper kommen beispielsweise bei der Wärmedämmung in Kühl- bzw. Gefriergeräten zur Verwendung. Hierbei wird in dem Bereich zwischen dem Außenmantel des Gerätes und dem zu kühlenden Innenbehälter ein Vakuumdämmkörper angeordnet, um mittels des Prinzips der Vakuumwärmedämmung zwischen Außen- und Innenseite des zu dämmenden Gerätes eine ausreichend hohe Wärmedämmung zu erreichen.

Die EP 1 719 604 A2 offenbart ein Verfahren, das sämtliche Merkmale des Oberbegriffs des Anspruchs 1 aufweist.

In der Patentanmeldung DE 10 2013 005 585 ist eine folienartige Hülle für einen Vakuumdämmkörper beschrieben, die sich dadurch auszeichnet, dass die in Beutelform vorgefertigte Hülle als eine diffusionsdichte Hülle verwendet wird, die vorzugsweise größer als die zu umhüllende Kontur ist, damit vorspringende oder zurückversetzte Konturen eines zu umhüllenden Körpers mit der folienartigen Hülle bedeckt beziehungsweise foliert werden können.

Aus dieser Anmeldung kann auch ein Verfahren entnommen werden, wie die folienartige Hülle an den zu umhüllenden Körper angelegt werden kann. Hierbei wird die in Beutelform vorgefertigte folienartige Hülle mittels Unterdruck an den zu umhüllenden Körper angelegt. Da typischerweise der zu umhüllende Körper oder die Folie zur Umhüllung Klebeflächen aufweisen, entsteht hierbei die Problematik, dass die Folie beim Kontakt mit dem Körper unverrückbar an ihm anhaftet. Ein Nachjustieren der Folienposition auf dem Körper ist somit nicht möglich. Dennoch ist ein schnell abbindender Klebstoff oder eine schnell abbindende Klebefläche sinnvoll, um eine möglichst schnelle Verarbeitung zu ermöglichen.

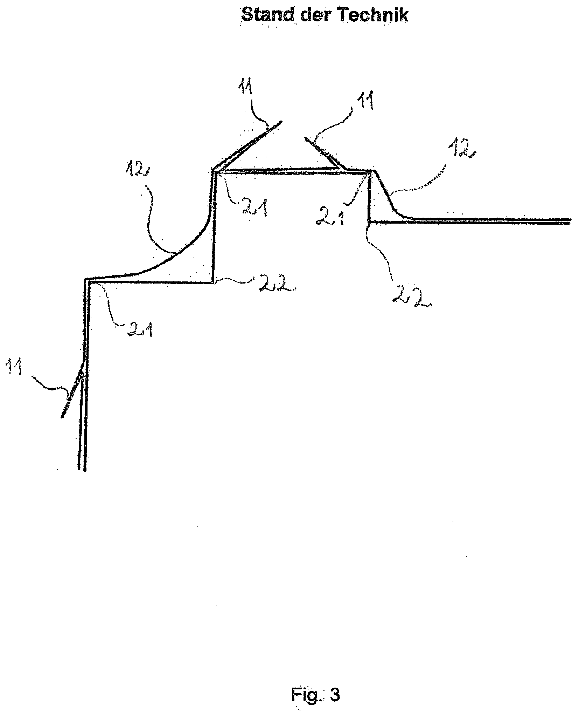

Figur 3 zeigt hierbei die im Stand der Technik vorkommenden Probleme. Bei einem Überstülpen eines übergroßen Foliensacks und einem anschließenden Ansetzen eines Unterdrucks zwischen der Folie und dem zu folierenden Körper besteht insbesondere bei konkaven oder konvexen Konturen des Körpers das Problem, dass die Folie zuerst mit den vorspringenden Konturabschnitten in Berührung kommt und an ihnen anhaftet. Dies führt dazu, dass dann trotz noch vorhandener Folienfläche ein vollständiges Anlegen der Folie in einem konkaven Teilbereich des Körpers nicht erreicht werden kann. So ergeben sich im Bereich einer konkaven Kontur 22 des Körpers gespannte Folienbereiche 12. Die überschüssige Folie, die sich eigentlich in die konkave Kontur 22 des Körpers hätte anlegen sollen, bildet hingegen Folienfalten 11.

Diese Überlegungen sind nicht auf Kühl- und/oder Gefriergeräte beschränkt sondern gelten für wärmeisolierte Behältnisse im Allgemeinen.

Da in den gespannten Folienbereichen 12 und in den Folienfalten 11 besonders leicht Beschädigungen der Folie auftreten können, ist es die Aufgabe der vorliegenden Erfindung ein Verfahren zu entwickeln, mit dem eine Folie auf einen Körper in einer besonders zuverlässigen Art und Weise, selbst bei konvexen oder konkaven Körperformen, angelegt werden kann.

Diese Aufgabe wird durch das Verfahren zum Anbringen einer Folie auf einen Körper mit den Merkmalen nach Anspruch 1 gelöst. Demnach ist unter anderem vorgesehen, dass eine Folie an einer Übergabeform angelegt und positioniert wird, der zu folierende Körper in die Übergabeform, an der die aufzubringende Folie angelegt ist, oder die Übergabeform, an der die aufzubringende Folie angelegt ist, in den zu folierenden Körper eingebracht wird, sodass sich die Folie zwischen dem Körper und der Übergabeform befindet. Weiter wird ein Unterdruck in einem Bereich zwischen Körper und Folie angelegt und/oder ein Überdruck in einem Bereich zwischen Übergabeform und Folie angelegt, damit die Folie von der Übergabeform auf den Körper übergeht.

Durch das Anlegen und Positionieren der Folie an einer Übergabeform wird dafür gesorgt, dass eine Berührung mit dem zu folierenden Körper erst nach Anlegen eines Unterdrucks zwischen Körper und Folie und/oder Anlegen eines Überdrucks zwischen Übergabeform und Folie erfolgt, sofern die Positionierung von Körper und Übergabeform sorgsam ausgeführt wird.

Vorzugsweise ist die auf den Körper anzubringende Folie eine Hochbarrierefolie. Unter dem Begriff Hochbarrierefolie wird vorzugsweise eine Umhüllung bzw. eine Folie verstanden, mittels derer der Gaseintrag in einem Vakuumdämmkörper so stark reduziert ist, dass der durch Gaseintrag bedingte Anstieg in der Wärmeleitfähigkeit des Vakuumdämmkörpers über dessen Lebensdauer hinweg ausreichend gering ist. Als Lebensdauer ist beispielsweise ein Zeitraum von 15 Jahren, vorzugsweise von 20 Jahren und besonders bevorzugt von 30 Jahren anzusetzen. Vorzugsweise legt der durch Gaseintrag bedingte Anstieg in der Wärmeleitfähigkeit des Vakuumdämmkörpers über dessen Lebensdauer bei kleiner 100 % und besonders bevorzugt bei kleiner 50 %.

Vorzugsweise ist die flächenspezifische Gasdurchgangsrate der Hochbarrierefolie kleiner 10⁻⁵ mbar * I / s *m² und besonders bevorzugt kleiner 10⁻⁶ mbar * I / s *m² (gemessen nach ASTM D-3985). Diese Gasdurchgangsrate gilt für Stickstoff und Sauerstoff. Für andere Gassorten (insbesondere Wasserdampf) bestehen ebenfalls niedrige Gasduchgangsraten vorzugsweise im Bereich von kleiner 10⁻² mbar * I / s *m² und besonders bevorzugt im Bereich von kleiner 10⁻³ mbar * I / s *m² (gemessen nach ASTM F-1249-90). Vorzugsweise werden durch diese geringen Gasdurchgangsraten die vorgenannten geringen Anstiege der Wärmeleitfähigkeit erreicht.

Eine Hochbarrierefolie besteht vorzugsweise aus einer Ein- oder Mehrschichtfolie (die vorzugsweise siegelfähig ist) mit einer oder mehreren Barriereschichten (typischerweise metallische Schichten oder Oxid-Schichten, wobei als Metall oder Oxid vorzugsweise Aluminium bzw. ein Aluminiumoxid Verwendung findet).

Bei den oben genannten Werten bzw. bei dem Aufbau der Hochbarrierefolie handelt es sich um exemplarische, bevorzugte Angaben, die die Erfindung nicht beschränken.

Damit die an der Übergabeform angelegte Folie auf den zu folierenden Körper übergeht, wird eine Druckdifferenz zwischen dem Bereich von Folie und Körper und dem Bereich von Folie und Übergabeform gebildet. Dabei wird die Druckdifferenz so ausgestaltet, dass sich die an die Übergabeform angelegte Folie von dieser entfernt und in Richtung des Körpers bewegt. Dadurch wird ein besonders einfaches Anlegen einer Folie auf einen Körper erreicht.

Vorzugsweise weist die Überform eine glatte Oberfläche auf, damit eine an der Übergabeform anliegende Folie einfach positioniert werden kann. Hierbei kommt selbstverständlich auch eine manuelle Repositionierung einer an der Übergabeform anliegenden Folie in Betracht.

Nach einer weiteren vorteilhaften Ausführungsform des erfindungsgemäßen Verfahrens wird zum Anlegen und Positionieren der Folie an der Übergabeform ein Unterdruck zwischen Folie und Übergabeform ausgebildet. Es wird also in einem durch Folie und Übergabeform gebildeten Raum eine Druckdifferenz vorgesehen, damit die Folie sich in Richtung der Übergabeform bewegt. Dadurch wird in einer einfachen Art und Weise ein Anhaften der Folie an der Übergabeform sichergestellt. Durch Ausbilden eines Unterdrucks zwischen Folie und Übergabeform wird auch einem Ablösen einer einmal an die Übergabeform angelegten Folie entgegengewirkt, sodass der zu folierende Körper bereits in eine unmittelbare Nachbarschaft zu der mit der Folie angelegten Übergabeform gebracht werden kann, ohne dass die Folie sich hiervon ungewollterweise ablöst und mit dem Körper in Berührung kommt. Ein Übergang der Folie auf den zu folierenden Körper wird erst mit einem Vorsehen einer Druckdifferenz stattfinden, die eine Bewegung der Folie in Richtung des Körpers bedingt.

Vorteilhafterweise wird nach einer weiteren Ausführungsform der vorliegenden Erfindung der zu folierende Körper vor einem Übertragen der Folie auf den Körper teilweise oder vollständig an seinen zu folierenden Flächen mit einer Klebeschicht versehen, und/oder die sich auf den Körper anliegende Seite der Folie vor einem Übertragen der Folie auf den Körper teilweise oder vollständig an seinen sich an den Körper anlegenden Flächen mit einer Klebeschicht versehen.

Das Vorsehen einer Klebeschicht führt zu einer schnellen Verarbeitung sowie zu einer dauerhaften Verbindung der Folie mit dem Körper. Um die Verarbeitungsgeschwindigkeit weiter zu erhöhen, ist es sinnvoll, einen schnell abbindenden Kleber für die Klebeschicht zu verwenden. Dabei kann sich die Klebeschicht sowohl auf dem zu folierenden Körper als auch auf der auf den Körper aufzubringenden Folie befinden. Auch eine Kombination von Klebeschicht auf dem Körper und Klebeschicht auf der Folie ist möglich.

Vorzugsweise wird die Klebeschicht jedoch auf dem zu folierenden Körper angebracht, da dieser im Gegensatz zur Folie einen starren Grundaufbau aufweist, auf den das Aufbringen einer Klebeschicht einfacher umzusetzen ist.

Auch ist denkbar, dass bei einem Zweikomponentenkleber eine der beiden Komponenten auf der sich auf den Körper anlegenden Seite der Folie vorhanden ist und die andere der beiden Komponenten auf der zu folierenden Oberfläche des Körpers angebracht ist. Hierbei erhält man den Vorteil, dass die beiden Komponenten vor einem Inkontaktbringen miteinander keine klebende Wirkung entfalten und die Verarbeitung der entsprechenden Bauteile einfacher auszuführen ist.

Nach dem erfindungsgemäßen Verfahren weist die Übergabeform an einer zu folierenden Oberfläche des Körpers, die eine Vertiefung aufweist, eine dazu konträre Vertiefung auf. Zudem wird vor einem Übertragen der Folie auf den Körper, der Körper so zur Übergabeform ausgerichtet, dass jeweils entsprechende Paarungen einer Vertiefung des Körpers und einer Vertiefung der Übergabeform zueinander ausgerichtet sind.

Das bedeutet, dass die Übergabeform bei einer Vertiefung der zu folierenden Oberfläche des Körpers eine korrespondierende Vertiefung aufweist, sodass sich der durch Körper und Übergabeform gebildete Bereich an dieser Position sowohl aufgrund des Körpers als auch aufgrund der Übergabeform verbreitert. Dies beschreibt eine entsprechende Paarung einer Vertiefung von Körper und Übergabeform und definiert auch eine konträre Vertiefung, die die Übergabeform hinsichtlich einer Vertiefung der zu folierenden Oberfläche des Körpers aufweist. An einer Vertiefung des zu folierenden Körpers (konkave Kontur) wird also eine Vertiefung der Übergabeform vorgesehen. Diese beiden Konturen stehen demnach voneinander ab.

Bringt man eine entsprechende Paarung einer Vertiefung eines Körpers und einer Übergabeform in eine zueinander ausgerichtete Lage bevor die Folie von der Übergabeform auf den Körper übergeht, kann beim Übergabevorgang der Folie von der Übertragungsform an den Körper die Vertiefung in einer Oberfläche des Körpers vollständig mit Folie bedeckt werden, ohne dass sich Teile des Körpers in der Vertiefung nicht mit einer Folie abdecken lassen.

Vorzugsweise wird in einer Vertiefung der Übergabeform auch eine Folie vorgesehen, die sich dann in die dazu konträr ausgebildete Kontur des Körpers anlegen kann.

Nach einer weiteren vorteilhaften Ausführungsform des erfindungsgemäßen Verfahrens weist die Folie zum Anbringen auf den Körper eine beutelförmige Grundstruktur auf und ist vorzugsweise eine Hochbarrierefolie.

Durch die beutelförmige Grundstruktur der Folie ist sowohl das Anlegen der Folie an eine Übergabeform als auch der Übergang an den zu folierenden Körper besonders einfach auszuführen.

Vorzugsweise ist die Folie zum Anbringen auf den Körper größer als die zu folierenden Flächen des Körpers. Dadurch wird sichergestellt, dass ausreichend Folienmenge vorhanden ist, um die gesamte zu folierende Oberfläche des Körpers abzudecken. Ferner bilden sich somit keine Spannungen in der auf den Körper aufgebrachten Folie, wodurch Bereiche des Körpers, die nicht mit Folie bedeckt sind, minimiert werden.

Nach einer weiteren vorteilhaften Ausführungsform des vorliegenden Verfahrens kann die Übergabeform den zu folierenden Körper in einer Öffnung vollständig aufnehmen oder der folierende Körper kann die Übergabeform vollständig in einer Öffnung aufnehmen. Dies beschreibt eine besonders einfache Ausgestaltung des Verfahrens, in dem wirkungsvoll große Flächen eines zu folierenden Körpers effektiv mit Folie versehen werden können.

In einer Ausführungsform ist vorgesehen, dass es sich bei dem zu folierenden Körper um den Innenbehälter eines wärmeisolierten Behältnisses und vorzugsweise um den Innenbehälter eines Kühl- und/oder Gefriergerätes handelt.

Ein Vakuumdämmkörper, der eine Folie, vorzugsweise eine Hochbarrierefolie, aufweist, kann hergestellt werden, indem die Folie nach einem der vorausgehend beschriebenen Ausführungsformen des erfindungsgemäßen Verfahrens auf den zu folierenden Körper angebracht wird.

Vorteilhafterweise besteht ein Kernmaterial des Vakuumdämmkörpers hierbei aus einer Pulverschüttung, die durch die Folie diffusionsdicht umhüllt ist. Dabei weist die Folie in Richtung des Kernmaterials hineinragende Falten auf.

Die in Richtung des Kernmaterials hineinragenden Falten ergeben sich aus einem Anwenden einer der Ausführungsformen des Verfahrens zum Anbringen einer Folie auf einen Körper.

Ein wärmeisoliertes Behältnis, vorzugsweise ein Kühl- und/oder Gefriergerät, kann wenigstens einen Vakuumdämmkörper enthalten, der mit Hilfe eines der vorstehend beschriebenen Verfahren gefertigt worden ist.

Insbesondere kann ein wärmeisoliertes Behältnis, vorzugsweise Kühl- und/oder Gefriergerät mit wenigstens einem Korpus und mit wenigstens einem temperierten und vorzugsweise gekühlten Innenraum, der von dem Korpus umgeben ist sowie mit wenigstens einem Verschlusselement, mittels dessen der temperierte und vorzugsweise gekühlte Innenraum verschließbar ist, wobei sich zwischen dem temperierten und vorzugsweise gekühlten Innenraum und der Außenwand des Behältnisses bzw. Gerätes wenigstens ein Zwischenraum befindet, wobei in dem Zwischenraum wenigstens ein Vakuumdämmkörper mit einem von einer Folie umgebenen und mit Kernmaterial gefüllten evakuierten Bereich angeordnet ist, so hergestellt werden, dass wenigstens ein Abschnitt der Folie im Rahmen eines erfindungsgemäßen Verfahrens am Innenbehälter des Behältnisses bzw. Gerätes angebracht wird.

Besonders bevorzugt ist im Zusammenhang mit derartigen wärmeisolierenden Behältnissen bzw. Kühl- und/oder Gefriergeräten eine Ausführung, bei der der Vakuumdämmkörper ein Vollvakuumsystem bildet. Darunter ist eine Wärmedämmung zu verstehen, die ausschließlich oder überwiegend aus einem evakuierten Bereich besteht, der mit einem Kernmaterial gefüllt ist. Somit kann zwischen der Innenwand und der Außenwand des Behältnisses bzw. Gerätes als Wärmedämmung ausschließlich ein solcher Vakuumdämmkörper vorliegen, der einen durch eine vakuumdichte Folie umgebenen Bereich aufweist, in dem Vakuum herrscht und in dem ein Kernmaterial angeordnet ist. Eine Ausschäumung und/oder Vakuumisolationspaneele als Wärmedämmung oder eine sonstige Wärmedämmung außer dem Vollvakuumsystem zwischen der Innenseite und der Außenseite des Behältnisses bzw. Gerätes sind vorzugsweise nicht vorgesehen.

Diese bevorzugte Art der Wärmedämmung in Form eines Vollvakuumsystems kann sich zwischen der den Innenraum begrenzenden Wand und der Außenwand des Korpus und/oder zwischen der Innenseite und der Außenseite des Verschlusselementes, wie z.B. einer Tür, Klappe, Deckel oder dergleichen erstrecken.

Das Vollvakuumsystem kann so erhalten werden, dass eine Umhüllung aus einer gasdichten Folie mit einem Kernmaterial gefüllt und anschließend vakuumdicht versiegelt wird. In einer Ausführungsform erfolgt sowohl das Befüllen als auch das vakuumdichte Versiegeln der Umhüllung bei Normal- bzw. Umgebungsdruck. Die Evakuierung erfolgt dann durch Anschluss einer geeigneten in die Umhüllung eingearbeiteten Schnittstelle, beispielsweise eines Evakuierungsstutzens, der ein Ventil aufweisen kann, an eine Vakuumpumpe. Vorzugsweise herrscht während der Evakuierung außerhalb der Umhüllung Normal- bzw. Umgebungsdruck. Es ist in dieser Ausführungsform vorzugsweise zu keinem Zeitpunkt der Herstellung erforderlich, die Umhüllung in eine Vakuumkammer einzubringen. Insofern kann in einer Ausführungsform während der Herstellung der Vakuumdämmung auf eine Vakuumkammer verzichtet werden.

Der temperierte Innenraum ist je nach Art des Gerätes (Kühlgerät, Wärmeschrank etc.) entweder gekühlt oder beheizt. Wärmeisolierte Behältnisse im Sinne der obigen Beschreibung weisen mindestens einen temperierten Innenraum auf, wobei dieser gekühlt oder beheizt sein kann, so dass sich in dem Innenraum eine Temperatur unterhalb oder oberhalb der Umgebungstemperatur von z.B. 21 °C ergibt.

Bei dem oben beschriebenen Behältnis kann es sich um ein Kühl- und/oder Gefriergerät, insbesondere um ein Haushaltsgerät bzw. ein gewerbliches Kühlgerät handeln. Beispielsweise sind solche Geräte angedacht, die für eine stationäre Anordnung im Haushalt, in einem Hotelzimmer, in einer gewerblichen Küche oder in einer Bar konzipiert sind. Beispielsweise kann es sich auch um einen Weinkühlschrank handeln. Ferner können auch Kühl- und/oder Gefriertruhen angedacht sein. Die Geräte können eine Schnittstelle zur Anbindung an eine Stromversorgung, insbesondere an ein Haushaltsstromnetz (z.B. einen Stecker) und/oder eine Steh- oder Einbauhilfe wie beispielsweise Stellfüße oder Schnittstelle zur Fixierung innerhalb einer Möbelnische aufweisen. Beispielsweise kann es sich bei dem Gerät um ein Einbaugerät oder auch um ein Standgerät handeln.

Vorzugsweise ist das Behältnis bzw. das Gerät derart ausgebildet, dass es mit einer Wechselspannung, wie beispielsweise mit einer Hausnetzspannung von z.B. 120 V und 60 Hz oder 230 V und 50 Hz betrieben werden kann. In einer alternativen Ausführungsform ist denkbar, dass das Behältnis bzw. das Gerät derart ausgebildet, dass es mit Gleichstrom einer Spannung von beispielsweise 5 V, 12 V oder 24 V betrieben werden kann. In dieser Ausgestaltung kann vorgesehen sein, dass innerhalb oder außerhalb des Gerätes ein Steckernetzteil vorgesehen ist, über welches das Gerät betrieben wird. Ein Betrieb mit Gleichspannung kann insbesondere dann zur Anwendung kommen, wenn das Behältnis eine thermoelektrische Wärmepumpe zum Temperieren des Innenraums aufweist.

Insbesondere kann vorgesehen sein, dass das Kühl- und/oder Gefriergerät eine schrankartige Gestalt hat und einen Nutzraum aufweist, der an seiner Vorderseite (im Falle einer Truhe an der Oberseite) für einen Benutzer zugänglich ist. Der Nutzraum kann in mehrere Kompartimente unterteilt sein, die alle bei derselben oder bei unterschiedlichen Temperaturen betrieben werden. Alternativ kann lediglich ein Kompartiment vorgesehen sein. Innerhalb des Nutzraumes bzw. eines Kompartiments können auch Lagerungshilfen wie beispielsweise Ablagefächer, Schubladen oder Flaschenhalter (im Falle einer Truhe auch Raumteiler) vorgesehen sein, um eine optimale Lagerung von Kühl- oder Gefriergütern und eine optimale Platzausnützung zu gewährleisten.

Der Nutzraum kann durch wenigstens eine um eine vertikale Achse schwenkbare Türe verschlossen sein. Im Falle einer Truhe ist eine um eine horizontale Achse schwenkbare Klappe oder ein Schiebedeckel als Verschlusselement denkbar. Die Türe oder ein sonstiges Verschlusselement kann im geschlossenen Zustand anhand einer umlaufenden Magnetdichtung mit dem Korpus im Wesentlichen luftdicht in Verbindung stehen. Vorzugsweise ist auch die Türe bzw. ein sonstiges Verschlusselement wärmeisoliert, wobei die Wärmeisolierung anhand einer Ausschäumung und ggf. anhand von Vakuumisolationspaneelen erreicht werden kann, oder auch vorzugsweise anhand eines Vakuumsystems und besonders bevorzugt anhand eines Vollvakuumsystems. An der Innenseite der Türe können ggf. Türabsteller vorgesehen sein, um auch dort Kühlgüter lagern zu können.

In einer Ausführungsform kann es sich um ein Kleingerät handeln. In derartigen Geräten weist der Nutzraum, der durch die Innenwand des Behälters definiert ist, beispielsweise ein Volumen von kleiner 0,5 m³, kleiner 0,4 m³ oder kleiner 0,3 m³ auf. Die Außenabmessungen des Behälters bzw. Gerätes liegen vorzugsweise im Bereich bis 1 m hinsichtlich der Höhe, der Breite und der Tiefe.

Die Umhüllung kann insbesondere für ein Vakuumdämmelement genutzt werden, bei dem rechteckig umlaufende Einbuchtungen oder Ausstülpungen existieren. Dies kann z.B. auch ein komplettes Behältnis aus einem Vakuumdämmkörper sein, bei dem im einfachsten Fall eines rechteckigen Behälters der Innenraum als Einbuchtung in den Hüllquader verstanden wird. Bei einer solchen rechteckig umlaufenden Einbuchtung erweist sich eine Folienfaltung als sinnvoll, bei der in den Eckbereichen Folienfalten in den späteren Dämmraum hineinragen. Diese, an den Eckbereichen leicht nachvollziehbare Art der Folienfaltung, lässt sich aber auch verallgemeinert als Produktmerkmal eines nach dem erfindungsgemäßen Verfahren hergestellten Vakuumdämmkörper betrachten. Merkmal ist dabei eine Folienfalte, die in die Pulverschüttung des Kernmaterials hineinragt.

Weitere Merkmale der Erfindung werden anhand von nachfolgend detailliert beschriebenen Zeichnungen erläutert. Es zeigen:
- Fig. 1:: eine Schnittansicht einer Übergabeform, an der eine Folie anliegt und in die ein zu folierender Körper eingebracht ist,
- Fig. 2:: den Vorgang einer Folienübergabe im Bereich einer Vertiefung des zu folierenden Körpers, und
- Fig. 3:: das Ergebnis eines Anbringens einer Folie auf einen Körper nach einem herkömmlichen Verfahren.

Fig. 3 zeigt das Resultat eines Verfahrens zum Anbringen einer Folie auf einen Körper nach dem Stand der Technik. Hierbei wird eine Folie auf einen mit Klebstoff versehenen Körper übergestülpt und zum Anlegen der Folie ein Unterdruck zwischen Folie und Körper erzeugt. Da der Klebstoff an dem Körper ein Verrücken der Folie nach einem Kontaktieren mit der Folie nicht mehr zulässt, bilden sich in Vertiefungen 22 des Körpers (konkaven Konturen) Bereiche, in denen die Folie nicht vollständig mit dem Körper in Kontakt steht. Vielmehr bilden sich Spannbereiche 12 der Folie, die sich im Bereich der Vertiefungen 22 (konkaven Konturen) des Körpers ergeben. Da die Gesamtfläche der an den Körper anzulegenden Folie typischerweise jedoch ausreichend groß dimensioniert worden ist, um sämtliche Flächen des Körpers zu belegen, ergibt sich aufgrund der Spannflächen 12 der Folie ein Materialüberschuss, der sich in der Bildung von Folienfalten 11 äußert. Typischerweise bilden sich zudem auch in der Nähe von Erhebungen 21 (konvexe Konturen) des Körpers vermehrt Spannflächen 12 der Folie.

Da diese Spannflächen 12 und die Folienfalten 11 ein Hindernis zur weiteren Verarbeitung eines mit Folie versehenen Körpers darstellen, und zudem sehr anfällig für Beschädigungen sind, gilt es Spannflächen der Folie grundsätzlich zu vermeiden. Besonderes Augenmerk wird hierbei auf die Spannflächen 12 der Folie gesetzt, da diese ganz besonders anfällig für eine Beschädigung der Folie bei einer geringen Krafteinwirkung sind.

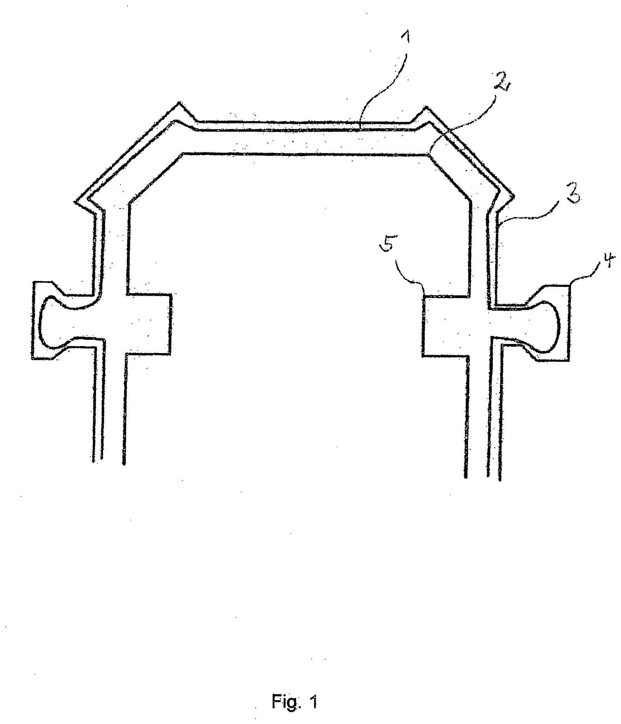

Fig. 1 zeigt eine Übergabeform 3, an der eine Folie 1 angelegt ist. Ferner ist ein Körper 2 in die Übergabeform 3 eingebracht, sodass eine Folie 1 zwischen Körper 2 und Übergabeform 3 angeordnet ist. Darüber hinaus erkennt man eine Vertiefung (konkave Kontur) des Körpers 2 und eine dazu korrespondierende Ausnehmung 4 in der Übergabeform 3, die gegenüber der Vertiefung 5 des Körpers 2 ausgerichtet ist. Auch erkennt man, dass die Folie auch in einem Teil dieser Ausnehmung 4 der Übergabeform 3 vorhanden ist.

Typischerweise wird die Folie 1 durch Anlegen eines Unterdrucks zwischen dem Bereich der Folie 1 und der Übergabeform 3 an die Übergabeform angelegt. So wird sichergestellt, dass ein beispielsweise mit Klebstoff versehender Körper 2 nicht ungewollterweise mit der Folie in Berührung kommt. Solange man einen genügenden Abstand zur Übergabeform 3 einhält.

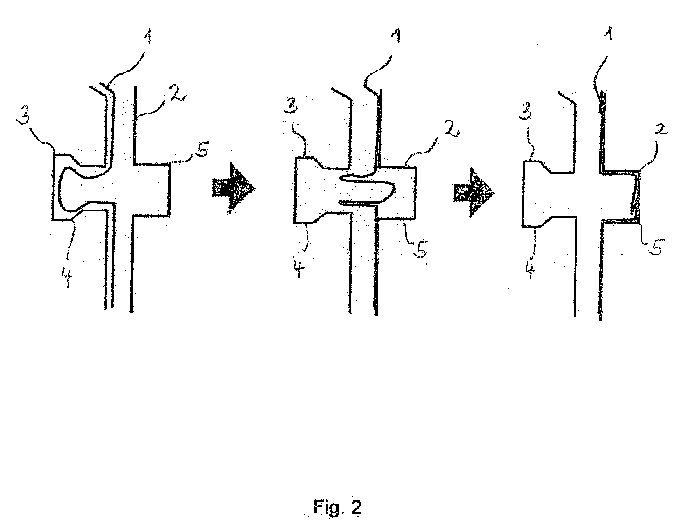

Fig. 2 zeigt ein Übergehen der Folie 1 von der Übergabeform 3 an den Körper 2.

In der linken der drei Abbildungen der Fig. 2 ist die Folie 1 noch an der Übergabeform 3 angelegt. Die mittige Darstellung zeigt einen Zustand der Folie, in der diese noch nicht vollständig mit allen Flächen des Körpers 2 in Berührung gekommen ist. In diesem Zustand wurde jedoch bereits eine Druckdifferenz zwischen den Bereichen von Folie und Übergabeform 3 und Folie 1 und Körper 2 derart angelegt, dass sich die Folie 1 von der Übergabeform 3 ablöst und in Richtung des Körpers 2 bewegt. Ein in einer Ausnehmung 4 der Übergabeform 3 vorgesehener Folienüberschuss ist gerade dabei sich in Richtung der Vertiefung (konkaven Kontur) 5 des Körpers 2 anzulegen.

In der rechten Darstellung der Figur 2 sieht man nun das Ergebnis des erfindungsgemäßen Verfahrens, bei dem keine durch die Folie gespannten Flächen in einer Vertiefung (konkave Kontur) 5 des Körpers 2 vorkommen. Vielmehr liegt die Folie 1 in sämtlichen durch den Körper 2 gebildeten Flächen vollständig an.

## Patentansprüche

1. Verfahren zum Anbringen einer Folie (1) auf einen Körper (2), wobei das Verfahren die Schritte umfasst:
Anlegen und Positionieren einer Folie (1) an einer Übergabeform (3),
Einbringen des zu folierenden Körpers (2) in die Übergabeform (3), an der die aufzubringende Folie (1) angelegt ist, oder Einbringen der Übergabeform (3), an der die aufzubringende Folie (1) angelegt ist, in den zu folierenden Körper (2), sodass sich die Folie (1) zwischen dem Körper (2) und der Übergabeform (3) befindet, und
Anlegen eines Unterdrucks in einem Bereich zwischen Körper (2) und Folie (1) und/oder Anlegen eines Überdrucks in einem Bereich zwischen Übergabeform (3) und Folie (1), damit die Folie (1) von der Übergabeform (3) auf den Körper (2) übergeht,
**dadurch gekennzeichnet, dass**
die Übergabeform (3) an einer zu folierenden Oberfläche des Körpers (2), die eine Vertiefung (5) aufweist, eine dazu konträre Vertiefung (4) aufweist, und
vor einem Übertragen der Folie (1) auf den Körper (2), der Körper (2) so zur Übergabeform (3) ausgerichtet wird, dass jeweils entsprechende Paarungen einer Vertiefung (5) des Körpers (2) und einer Vertiefung (4) der Übergabeform (3) zueinander ausgerichtet sind.

2. Verfahren nach Anspruch 1, wobei zum Anlegen und Positionieren der Folie (1) an der Übergabeform (3) ein Unterdruck zwischen Folie (1) und Übergabeform (3) ausgebildet wird.

3. Verfahren nach einem der vorhergehenden Ansprüche, wobei der zu folierende Körper (2) vor einem Übertragen der Folie (1) auf den Körper (2) teilweise oder vollständig an seinen zu folierenden Flächen mit einer Klebeschicht versehen wird, und/oder die sich auf den Körper (2) anlegende Seite der Folie (1) vor einem Übertragen der Folie (1) auf den Körper (2) teilweise oder vollständig an seinen sich an den Körper (2) anlegenden Flächen mit einer Klebeschicht versehen wird.

4. Verfahren nach einem der vorhergehenden Ansprüche, wobei die Folie (1) zum Anbringen auf den Körper (2) eine beutelförmige Grundstruktur aufweist und vorzugsweise eine Hochbarrierefolie ist.

5. Verfahren nach einem der vorhergehenden Ansprüche, wobei die Folie (1) zum Anbringen auf den Körper (2) größer als die zu folierenden Flächen des Körpers (2) ist.

6. Verfahren nach einem der vorhergehenden Ansprüche, wobei die Übergabeform (3) den zu folierenden Körper (2) in einer Öffnung vollständig aufnehmen kann oder der zu folierende Körper (2) die Übergabeform (3) vollständig in einer Öffnung aufnehmen kann.

7. Verfahren nach einem der vorhergehenden Ansprüche, wobei es sich bei dem zu folierenden Körper (2) um den Innenbehälter eines wärmeisolierten Behältnisses und vorzugsweise um den Innenbehälter eines Kühl- und/oder Gefriergerätes handelt.

## Claims

1. A method of applying a film (1) to a body (2), said method comprising the steps:
applying and positioning a film (1) to and at a transfer mold (3);
introducing the body (2) to be film coated into the transfer mold (3) at which the film (1) to be attached is applied or introducing the transfer mold (3) to which the film (1) to be attached is applied into the body (2) to be film coated so that the film (1) is located between the body (2) and the transfer mold (3); and
application of a vacuum in a region between the body (2) and the film (1) and/or application of an excess pressure in a region between the transfer mold (3) and the film (1) so that the film (2) moves from the transfer mold (3) to the body (2),
**characterized in that**
the transfer mold (3) has at a surface of the body (2) to be film coated that has a recess (5) a recess (4) contrary thereto; and
**in that** the body (2) is oriented with respect to the transfer mold (3) before a transfer of the film (1) to the body (2) such that respective corresponding pairs of a recess (5) of the body (2) and of a recess (4) of the transfer mold (3) are aligned with one another.

2. A method in accordance with claim 1, wherein a vacuum is formed between the film (1) and the transfer mold (3) for applying and positioning the film (1) to and at the transfer mold (3).

3. A method in accordance with one of the preceding claims, wherein, the body (2) to be film coated is partly or completely provided with an adhesive layer at its surfaces to be film coated before a transfer of the film (1) to the body (2) and/or the side of the film (1) contacting the body (2) is partly or completely provided with an adhesive layer at its surfaces contacting the body (2) before a transfer of the film t(1) o the body (2).

4. A method in accordance with one of the preceding claims, wherein the film (1) for application to the body (2) has a bag-shaped base structure and is preferably a high barrier film.

5. A method in accordance with one of the preceding claims, wherein the film (1) for application to the body (2) is larger than the surfaces of the body (2) to be film coated.

6. A method in accordance with one of the preceding claims, wherein the transfer mold (3) can completely receive the body (2) to be film coated in an opening or the body (2) to be film coated can completely receive the transfer mold (3) in an opening.

7. A method in accordance with one of the preceding claims, wherein the body (2) to be film coated is the inner container of a heat-insulated receptacle and preferably the inner container of a refrigerator unit and/or a freezer unit.

## Revendications

1. Procédé d'application d'un film (1) sur un corps (2), le procédé comprenant les étapes consistant à :
apposer et positionner un film (1) sur un moule de transfert (3),
introduire le corps (2) à recouvrir d'un film dans le moule de transfert (3), sur lequel le film (1) à appliquer est apposé, ou introduire le moule de transfert (3), sur lequel le film (1) à appliquer est apposé, dans le corps (2) à recouvrir d'un film, de telle sorte que le film (1) se trouve entre le corps (2) et le moule de transfert (3), et
appliquer une dépression dans une zone entre le corps (2) et le film (1) et/ou appliquer une surpression dans une zone entre le moule de transfert (3) et le film (1), pour que le film (1) passe du moule de transfert (3) au corps (2),
**caractérisé en ce que**
le moule de transfert (3) comporte, au niveau d'une surface du corps (2) à recouvrir d'un film qui comporte un creux (5), un creux (4) contraire à celui-ci, et
avant un transfert du film (1) sur le corps (2), le corps (2) est orienté par rapport au moule de transfert (3) de telle manière que des appariements respectivement correspondants d'un creux (5) du corps (2) et d'un creux (4) du moule de transfert (3) sont alignés les uns par rapport aux autres.

2. Procédé selon la revendication 1, dans lequel, pour apposer et positionner le film (1) sur le moule de transfert (3), une dépression est formée entre le film (1) et le moule de transfert (3).

3. Procédé selon l'une des revendications précédentes, dans lequel, avant un transfert du film (1) sur le corps (2), le corps (2) à recouvrir d'un film est partiellement ou entièrement pourvu d'une couche de collage sur ses surfaces à recouvrir d'un film, et/ou, avant un transfert du film (1) sur le corps (2), le côté du film (1) venant s'apposer sur le corps (2) est partiellement ou entièrement pourvu d'une couche de collage sur ses surfaces venant s'apposer sur le corps (2).

4. Procédé selon l'une des revendications précédentes, dans lequel le film (1) destiné à être appliqué sur le corps (2) présente une structure fondamentale en forme de sachet et est de préférence un film haute barrière.

5. Procédé selon l'une des revendications précédentes, dans lequel le film (1) destiné à être appliqué sur le corps (2) est plus grand que les surfaces du corps (2) à recouvrir d'un film.

6. Procédé selon l'une des revendications précédentes, dans lequel le moule de transfert (3) peut recevoir le corps (2) à recouvrir d'un film entièrement dans une ouverture ou le corps (2) à recouvrir d'un film peut recevoir le moule de transfert (3) entièrement dans une ouverture.

7. Procédé selon l'une des revendications précédentes, dans lequel le corps (2) à recouvrir d'un film est le réceptacle intérieur d'un contenant isolé thermiquement et de préférence le réceptacle intérieur d'un appareil de réfrigération et/ou de congélation.
